# EUROPEAN PATENT SPECIFICATION

(11) **EP 3 145 057 B1**
(45) Date of publication and mention of the grant of the patent: **04.05.2022**
(21) Application number: 15793247.6
(22) Date of filing: 26.03.2015
(51) Int. Cl.: H02K 15/03, H02K 1/27

(54) **PERMANENT MAGNET EMBEDDED ROTATING ELECTRICAL MACHINE**
ROTIERENDE ELEKTRISCHE MASCHINE MIT EINGEBETTETEN PERMANENTMAGNETEN
MACHINE ELECTRIQUE TOURNANTE A AIMANTS PERMANENTS ENCASTRES

(30) Priority: 15.05.2014 JP 2014101579
(43) Date of publication of application: 22.03.2017
(73) Proprietor: Fuji Electric Co., Ltd., Kawasaki-shi, Kanagawa 210-9530 (JP)
(72) Inventor: MOCHIDA, Toshiharu, Kawasaki-shi Kanagawa 210-9530 (JP); TOBA, Akio, Kawasaki-shi Kanagawa 210-9530 (JP); SHIMADA, Hiroshi, Kawasaki-shi Kanagawa 210-9530 (JP); NISHIMURA, Hirofumi, Kawasaki-shi Kanagawa 210-9530 (JP); SASAKI, Nobuyuki, Kawasaki-shi Kanagawa 210-9530 (JP)
(74) Representative: Appelt, Christian W.
(86) International application number: PCT/JP2015/059408
(87) International publication number: WO 2015/174145

(56) References cited:
- EP-A2- 1 662 634
- EP-A2- 2 562 913
- EP-A2- 2 587 634
- JP-A- 2004 320 989
- JP-A- 2004 320 989
- JP-A- 2008 131 813
- JP-A- 2010 081 754
- JP-A- 2010 081 754
- JP-A- 2012 228 101
- JP-A- 2013 099 047
- US-A1- 2008 129 129
- US-A1- 2014 091 663
- US-B1- 6 847 144

## Description

### Technical Field

The present invention relates to a rotating electrical machine having a rotor, such as a motor or generator, and in particular, relates to a permanent magnet embedded rotating electrical machine wherein a permanent magnet is embedded in the rotor.

### Background Art

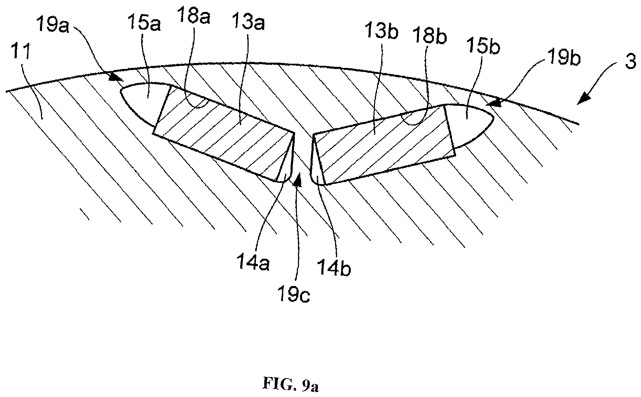

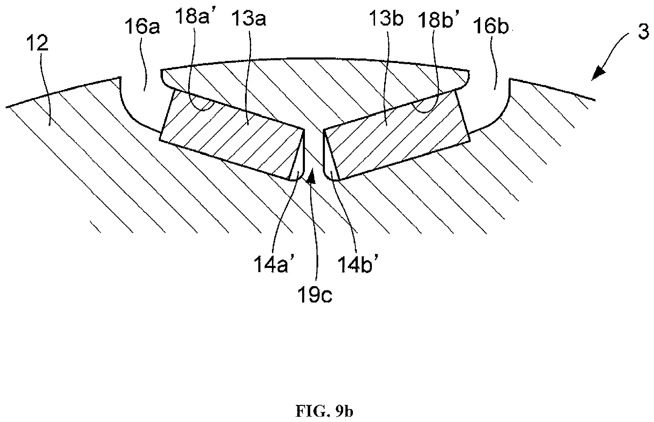

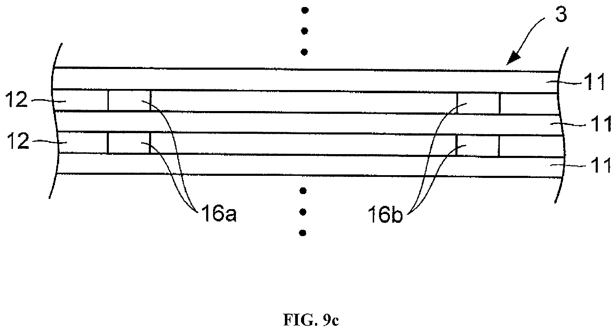

Fig. 9(a) and Fig. 9(b) are sectional views showing a rotor configuration of an IPM motor, which is one example of an existing permanent magnet embedded rotating electrical machine, and Fig. 9 (c) is a diagram showing an outer peripheral surface of the rotor. The IPM motor of this existing example is disclosed in PTL 1. The IPM motor is such that two permanent magnets 13a and 13b disposed in a V-shape so as to spread toward an outer side of a rotor 3 form one pole, and a multiple of poles are formed by a multiple of pairs of the permanent magnets 13a and 13b being embedded in an interior of the rotor 3. Also, the rotor 3 is configured by a stacking steel plate 11 shown in Fig. 9(a) and a stacking steel plate 12 shown in Fig. 9(b) being stacked alternately one by one, or in units of two or more, as shown in Fig. 9 (c).

As shown in Fig. 9 (a), two holding hole portions 18a and 18b, two cavity portions 14a and 14b, and two cavity portions 15a and 15b are formed as one pole in the stacking steel plate 11, and multiple groups of these are formed. Specifically, the two holding hole portions 18a and 18b, which are disposed in a V-shape and hold the two permanent magnets 13a and 13b, the two cavity portions 14a and 14b, which are disposed in a portion (a central portion of the V-shape) between the two holding hole portions 18a and 18b and communicate with the holding hole portions 18a and 18b respectively, and the two cavity portions 15a and 15b, which are disposed in portions (end portions of the V-shape) between the holding hole portions 18a and 18b and other neighboring poles and communicate with the holding hole portions 18a and 18b respectively, are formed as one pole.

The holding hole portion 18a, cavity portion 14a, and cavity portion 15a form one continuous region (hole), the holding hole portion 18b, cavity portion 14b, and cavity portion 15b also form one continuous region (hole), and it is sufficient that each is punched as one hole when a punching process is carried out on the stacking steel plate 11. Side bridges 19a and 19b are formed on outer edge sides of the cavity portions 15a and 15b by the punching process.

Also, as shown in Fig. 9(b), two holding hole portions 18a' and 18b' , two cavity portions 14a' and 14b' , and two cutout portions 16a and 16b are formed as one pole in the stacking steel plate 12, and multiple groups of these are formed. The holding hole portions 18a' and 18b' and cavity portions 14a' and 14b' in the stacking steel plate 12 are the same as the holding hole portions 18a and 18b and cavity portions 14a and 14b respectively in the stacking steel plate 11. Specifically, the two holding hole portions 18a' and 18b' , which are disposed in a V-shape and hold the two permanent magnets 13a and 13b, the two cavity portions 14a' and 14b', which are disposed in a portion (a central portion of the V-shape) between the two holding hole portions 18a' and 18b' and communicate with the holding hole portions 18a' and 18b' respectively, and the two cutout portions 16a and 16b, which are disposed so as to coincide with the cavity portions 15a and 15b respectively, communicate with the holding hole portions 18a' and 18b' respectively, and extend as far as an outer edge of the stacking steel plate 12, are formed as one pole. The cutout portions 16a and 16b are disposed so as to include the cavity portions 15a and 15b respectively in interiors thereof, whereby the cutout portions 16a and 16b are disposed so as to coincide with the cavity portions 15a and 15b respectively.

The holding hole portion 18a', cavity portion 14a', and cutout portion 16a form one continuous region (cutout), the holding hole portion 18b', cavity portion 14b', and cutout portion 16b also form one continuous region (cutout), and it is sufficient that each is punched as one cutout when a punching process is carried out on the stacking steel plate 12.

There is a center bridge 19c between the cavity portion 14a and cavity portion 14b in the stacking steel plate 11 and between the cavity portion 14a' and cavity portion 14b' in the stacking steel plate 12. In the stacking steel plates 11 and 12, a region farther to an inner peripheral side and a region farther to an outer peripheral side than the permanent magnets are connected via the center bridge 19c.

Further, when the stacking steel plates 11 and 12 are stacked alternately one by one, the outer peripheral surface of the rotor 3 is of an appearance shown in Fig. 9(c), wherein the cutout portions 16a and 16b are in columns, disposed in every other stacking steel plate.

In this existing example, the stacking steel plate 11 and stacking steel plate 12 are stacked alternately, and a magnetic flux passes through the cutout portions 16a and 16b in the stacking steel plate 12, because of which magnetic short-circuiting in the stacking steel plate 11 can be reduced without reducing the width of the side bridges 19a and 19b. Specifically, as the stacking steel plate 12 includes the cutout portions 16a and 16b, a total sectional area that is a combination of sectional areas of iron cores between the permanent magnets and rotor outer peripheral surface in each steel plate (that is, a total sectional area that is a combination of sectional areas of the side bridge 19a and 19b portions) becomes one-half, as a result of which magnetic short-circuiting is reduced.

Also, as the cutout portions 16a and 16b are formed in regions between the pole and other neighboring poles in the stacking steel plate 12, and no iron core exists, magnetic resistance in the cutout portions 16a and 16b can be greater than magnetic resistance in the side bridges 19a and 19b. Further, as the stacking steel plate 11 and stacking steel plate 12 are stacked alternately, magnetic resistance can be greater than when only the stacking steel plate 11 is used. Consequently, owing to the reduction in magnetic short-circuiting in the cutout portions 16a and 16b, magnetic flux leakage is restricted, a large amount of magnetic flux can be supplied to a stator side, and an increase in motor efficiency can be achieved. Furthermore, no iron core exists in portions through which d-axis magnetic flux and q-axis magnetic flux pass in the stacking steel plate 12, because of which a desired reluctance torque can be maintained.

According to the heretofore described configuration, even when the side bridges 19a and 19b need to be of a predetermined width for the sake of punching workability and centrifugal force resistance, magnetic resistance is increased and magnetic flux leakage can be restricted, while maintaining a predetermined width as the width of the side bridges 19a and 19b, owing to the existence of the cutout portions 16a and 16b.

EP 1 662 634 A2 discloses that a pair of nonmagnetic portions is formed in a rotor core at opposite ends of each pole, formed by a permanent magnet. The magnet forming one pole is divided into two parts, and a bridge portion is formed between the two divided magnet parts. EP 2 562 913 A2 discloses an interior permanent magnet motor including a rotor and a stator. The rotor includes a rotor core. The rotor core is formed by laminating steel plates each including pairs of magnet insertion holes and pairs of cutouts.

EP2587634 A2 discloses a permanent magnet embedded rotating electrical machine according to the preamble of claim 1.

### Citation List

### Patent Literature

PTL 1: JP-A-2011-4480

### Summary of Invention

### Technical Problem

However, the heretofore described existing permanent magnet embedded rotating electrical machine is such that the rotor is configured of multiple kinds of rotor steel member of differing forms, because of which there are the following kinds of problem. Firstly, there is a problem in that multiple kinds of punching die for manufacturing the rotor steel members are needed when manufacturing the rotor, and managing the members and dies is troublesome. Also, rotor steel members of differing forms have differing strength characteristics. Despite this, the existing permanent magnet embedded rotating electrical machine is such that the forms and dispositions of magnets and shafts need to be the same in the multiple kinds of rotor steel member. Therefore, the design range of magnet and shaft form and disposition is greatly reduced. As a result of this, there is no option other than to employ a small magnet and thin shaft, because of which the rotation speed or torque of the rotating electrical machine is greatly limited. Also, when configuring a rotor by stacking multiple kinds of rotor steel member of differing forms, three-dimensional magnetic field calculation and strength calculation is needed when designing the rotor, and there are problems in that the design burden increases and calculation accuracy decreases. Also, multiple kinds of rotor steel member of differing forms cannot be formed by a process of removing from one steel member by, for example, wire cutting. Therefore, there is a problem in that processing costs increase.

Also, the existing permanent magnet embedded rotating electrical machine is such that the side bridges 19a and 19b are in one kind of the two kinds of steel plate configuring the rotor, because of which there are the following problems. Firstly, as the side bridges 19a and 19b exist, not a little permanent magnet leakage magnetic flux still remains, and the magnetic resistance is also far from zero. This prevents torque generated by the rotor from being increased. Also, as the existing permanent magnet embedded rotating electrical machine is such that the side bridges 19a and 19b exist in the rotor, ventilation in the rotor axial direction is poor. This poor rotor ventilation is a factor in preventing cooling of the rotor, and in particular of the permanent magnets in the rotor. Also, as the side bridges 19a and 19b exist in the rotor, there is a problem in that a force supporting the permanent magnets against centrifugal force is uneven, and considerable stress is generated inside the permanent magnets.

Also, a permanent magnet embedded rotating electrical machine is generally such that when a rotor steel member is fitted onto and fixed to a shaft, circumferential direction assembly residual stress remains in the rotor steel member. A range in which the assembly residual stress mainly remains is a radial range wherein no hole or cutout exists on a circumference centered on the rotor shaft (that is, a range connected in a ring-form) . In the case of the existing example, the side bridges 19a and 19b exist, because of which there is a ring-form region on the outermost periphery of the rotor, and tensile residual stress remains in the ring-form region on the outermost periphery. Also, shear stress caused by centrifugal force when the rotor rotates is exerted on the side bridges 19a and 19b. Consequently, it is necessary to increase the width of the side bridges 19a and 19b in order to prevent the side bridges 19a and 19b breaking when the rotor rotates. Therefore, the existing example is such that reducing leakage magnetic flux is difficult.

Also, the existing example is such that considerable assembly residual stress remains near the position of the center bridge 19c. In addition, considerable tensile stress caused by centrifugal force (hereafter, centrifugal stress) is generated in the center bridge 19c when the rotor rotates. The rotor of the existing permanent magnet embedded rotating electrical machine is such that a region in which the assembly residual stress is generated and a region in which centrifugal force is generated are in proximity, and rotor strength design is difficult. In order to enable high rotor rotation speed, it is necessary that no large stress is generated within a range in which tensile residual stress is generated. In order to relieve stress, for example, it is conceivable that chamfering with a large radius of curvature is carried out on the center bridge 19c. When performing this kind of chamfering with a large radius of curvature, however, space in which a magnet is disposed decreases, and torque is limited. As there is no effective means of relaxing stress in the existing example, there is a problem in that rotor rotation speed is restricted, or magnet size is restricted, whereby torque is restricted.

Also, in general, when providing an irregularity in the outer peripheral surface of the rotor, a higher harmonic component of torque generated in the rotor can be converted into a fundamental wave component, whereby torque ripple is reduced, and torque can be increased. However, in the case of a rotor having a ring-form outermost peripheral region in which there is no hole or depression to the outer side of a magnet embedding hole, as in the existing example, assembly residual stress remains in the ring-form region on the outermost periphery. Consequently, the existing rotor is such that it is difficult to provide an irregularity leading to stress concentration in the outermost peripheral surface of a rotor in which this kind of residual stress remains. Therefore, the existing permanent magnet embedded rotating electrical machine is such that increasing torque by providing an irregularity in the outer peripheral surface of the rotor is difficult.

Also, when stacking the stacking steel plate 11 and stacking steel plate 12, as in the existing example, stacking accurately is difficult. When stacking cannot be carried out accurately, inserting the permanent magnets 13a and 13b in the holding hole portions 18a and 18b becomes difficult, the rotor 3 becomes unbalanced, and the magnetic suctioning force of the permanent magnets 13a and 13b is biased, whereby the load exerted on a bearing increases. Furthermore, it is also difficult at a time of manufacture or the like to walk around holding the rotor 3 wherein the stacking steel plate 11 and stacking steel plate 12 are stacked.

The invention, having been contrived with consideration to the heretofore described kind of situation, has a first object of providing a permanent magnet embedded rotating electrical machine that has superior rotor strength, and that can be manufactured at low cost. Also, a second object of the invention is to increase torque generated by the rotor without reducing rotor strength. Also, a third object of the invention is to accurately stack rotor steel plates, thereby stably manufacturing a permanent magnet embedded rotating electrical machine that achieves the first and second objects.

### Solution to Problem

In order to resolve the heretofore described problems, the invention provides a permanent magnet embedded rotating electrical machine such that permanent magnets of a multiple of poles are embedded in an interior of a rotor of which one pole is configured by two permanent magnets and which is formed by a multiple of rotor steel plates being stacked, wherein the rotor is such that an outer periphery of the rotor and a magnet embedding hole housing the permanent magnet communicate, and an auxiliary process for fixing positions of neighboring rotor steel plates with respect to each other is performed in a region between an inscribed circle of the magnet embedding hole and the outer periphery of the rotor in each rotor steel plate configuring the rotor.

### Advantageous Effects of Invention

According to the invention, magnet embedding holes are caused to communicate with an outer peripheral surface of a rotor, because of which there is no occurrence in an outermost periphery of the rotor of a region in which assembly residual stress remains. Therefore, the strength of the rotor when rotating can be increased. Also, as the configuration is such that the magnet embedding holes are caused to communicate with the outer peripheral surface of the rotor, a side bridge is unnecessary from the outset, because of which there is no need either to configure the rotor by combining a steel plate with no side bridge and a steel plate with a side bridge in order to reduce leakage magnetic flux. Consequently, the rotor can be manufactured by stacking only one kind of steel plate. Furthermore, the rotor steel plates can be stacked accurately using an auxiliary process. Also, a region in which positions of neighboring rotor steel plates with respect to each other are auxiliarily fixed is a region in a rotor steel plate between an inscribed circle of the magnet embedding hole and an outer periphery of the rotor, and there is little assembly residual stress in this region. Consequently, the effect of the auxiliary process on the rotor steel plate can be reduced. Brief Description of Drawings

[Fig. 1] Fig. 1 is a longitudinal sectional view of an overall configuration of a permanent magnet embedded rotating electrical machine, which is an embodiment of the invention.
[Fig. 2] Fig. 2 is a perspective view showing a configuration of one pole of a rotor in the same embodiment.
[Fig. 3] Fig. 3 is a front view of one pole of the rotor seen from a direction of a central axis of rotation in the same embodiment.
[Fig. 4] Fig. 4 is a front view of one pole of the rotor showing an example of a position in which an auxiliary process is performed in the same embodiment.
[Fig. 5] Fig. 5 is an axial direction sectional view of the rotor on which a V-shape process has been performed.
[Fig. 6] Fig. 6 is an axial direction sectional view of the rotor on which a boss process has been performed.
[Fig. 7] Fig. 7 is an axial direction sectional view of the rotor on which a pinhole process has been performed.
[Fig. 8] Fig. 8 is an axial direction sectional view of the rotor on which a bolt hole process has been performed.
[Fig. 9] Fig. 9 is a diagram showing a configuration of a rotor of an existing permanent magnet embedded rotating electrical machine.

### Description of Embodiments

Hereafter, while referring to the drawings, an embodiment of the invention will be described.

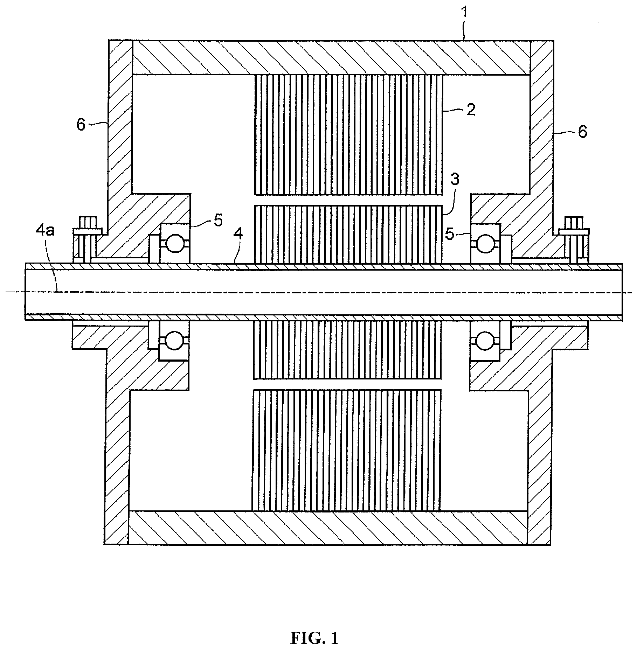

Fig. 1 is a longitudinal sectional view of an overall configuration of a permanent magnet embedded rotating electrical machine, which is an embodiment of the invention. In Fig. 1, a frame 1 is a housing that covers the whole of a permanent magnet embedded rotating electrical machine, and is configured of iron, aluminium, stainless steel, or the like. A fixed side iron core 2 of a hollow cylindrical form is provided on an inner side of the frame 1. The fixed side iron core 2 is formed by stacking silicon steel plates. A hole is provided in the fixed side iron core 2, and a stator winding formed of copper wire or the like is inserted through the hole (omitted from the drawing). A rotor 3, which is a rotating side iron core, is inserted on an inner side of the fixed side iron core 2 in a state sandwiching a predetermined gap between the rotor 3 and the fixed side iron core 2. The rotor 3 is formed by stacking silicon steel plates. A shaft 4 formed of iron or the like penetrates the center of the rotor 3. Ideally, a central axis of the shaft 4 forms a central axis of rotation 4a of the rotor 3. Further, the shaft 4 is supported via a rolling bearing 5, formed of bearing steel or the like, by shields 6 provided at front and back ends of the frame 1.

In this example, the permanent magnet embedded rotating electrical machine is a motor. The motor is such that the rotor 3 is provided with energy by a rotating magnetic field created by the stator winding (not shown), and rotates around the central axis of rotation 4a.

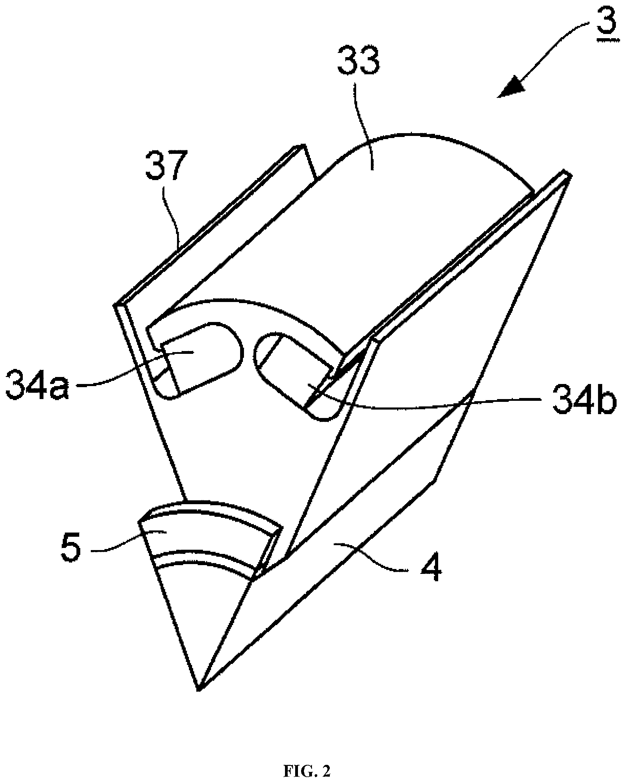

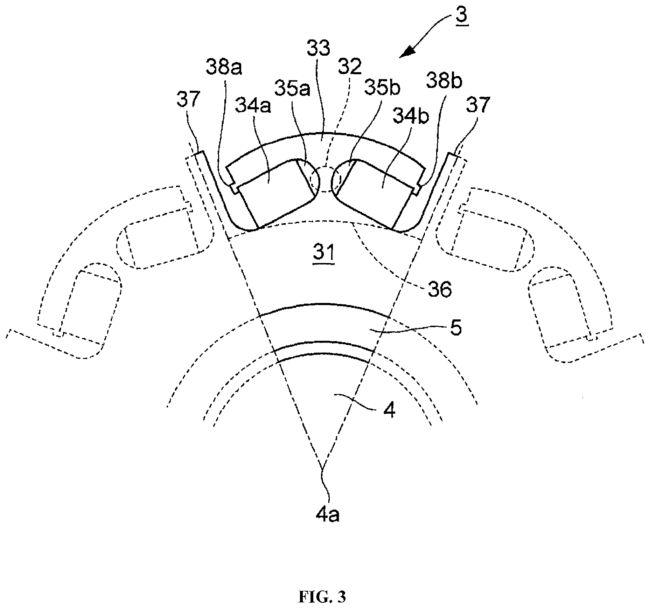

A characteristic of the embodiment is the configuration of the rotor 3. Fig. 2 is a perspective view showing a configuration of one pole of the rotor 3 in the embodiment. Also, Fig. 3 is a front view of one pole of the rotor 3 seen from the direction of the central axis of rotation 4a. In addition to the configuration of the one pole, a configuration of poles on either side in a rotational direction of the rotor 3 is shown by dotted lines in Fig. 3 in order to facilitate understanding of the configuration of the rotor 3.

The rotor 3 according to the embodiment can be largely divided into a core portion 31 toward the central axis of rotation 4a, two permanent magnets 34a and 34b provided in each pole, an outer peripheral edge portion 33 of each pole formed of a rotor steel member on an outer side of the permanent magnets 34a and 34b as seen from the central axis of rotation 4a, a center bridge 32 of each pole that connects each core portion 31 and outer peripheral edge portion 33, and a q-axis projection 37 provided between poles.

The outer peripheral edge portion 33 of one pole has an approximately arc-shaped sectional form, and is connected via the center bridge 32 to the core portion 31, in the center in the direction of rotation of the rotor. An outer peripheral surface of the outer peripheral edge portion 33 has a radius of curvature smaller than the distance from the central axis of rotation 4a to an outermost peripheral portion of the rotor. This is because it is clear from magnetic field calculations by the inventors that by adopting this kind of form for the outer peripheral edge portion 33, a higher harmonic component of torque is reduced, and a fundamental wave component of torque generated in the rotor 3 increases by an amount equivalent to the reduction of the higher harmonic component. In this way, the radius of curvature of one portion of the outer peripheral edge portion 33, rather than the whole of the outer peripheral edge portion 33, may be smaller than the distance from the central axis of rotation 4a to the outermost peripheral portion of the rotor.

A magnet embedding hole 35a for holding the permanent magnet 34a, and a magnet embedding hole 35b for holding the permanent magnet 34b, are provided on an inner side of the outer peripheral edge portion 33. The magnet embedding holes 35a and 35b are enclosed from three directions by the outer peripheral edge portion 33, center bridge 32, and core portion 31. The outer peripheral edge portion 33 supports the permanent magnets 34a and 34b on the central axis of rotation 4a side against centrifugal force working on the permanent magnets 34a and 34b when the rotor 3 rotates. The outer peripheral edge portions 33 corresponding to each pole are aligned in the direction of rotation of the rotor, with a gap between neighboring outer peripheral edge portions 33. The gap between two outer peripheral edge portions 33 is positioned centrally between poles. The magnet embedding holes 35a and 35b communicate with an outer periphery of the rotor via the gap between two outer peripheral edge portions 33.

The magnet embedding holes 35a and 35b are arrayed in an inverted V-shape. Further, regions of inner peripheral walls of the magnet embedding holes 35a and 35b on the central axis of rotation 4a side (the core portion 31) incline in a direction away from the central axis of rotation 4a as the regions move away from the center of neighboring poles and approach a region between the two magnet embedding holes (that is, the center bridge 32). Therefore, the center bridge 32 is in a position distanced to the outer side in the rotor radial direction from an inscribed circle 36 of all the magnet embedding holes 35a and 35b of the rotor 3.

The q-axis projection 37 passes through the gap between two outer peripheral edge portions 33 in a central position in the core portion 31 between poles, and protrudes in a centrifugal direction (a direction away from the central axis of rotation 4a). Positioning projections 38a and 38b that regulate movement of the permanent magnets 34a and 34b to the q-axis projection 37 side are provided in the magnet embedding holes 35a and 35b. The positioning projections 38a and 38b protrude toward the central axis of rotation 4a in regions of the inner walls of the magnet embedding holes 35a and 35b on the outer side in the rotor radial direction as seen from the permanent magnets 34a and 34b, that is, in end portions on the q-axis projection 37 side on the inner side of the outer peripheral edge portion 33. The permanent magnets 34a and 34b are pressed against the positioning projections 38a and 38b, and thus fixed inside the magnet embedding holes 35a and 35b. At this time, an adhesive is used in order to assist with the fixing of the permanent magnets 34a and 34b in the magnet embedding holes 35a and 35b.

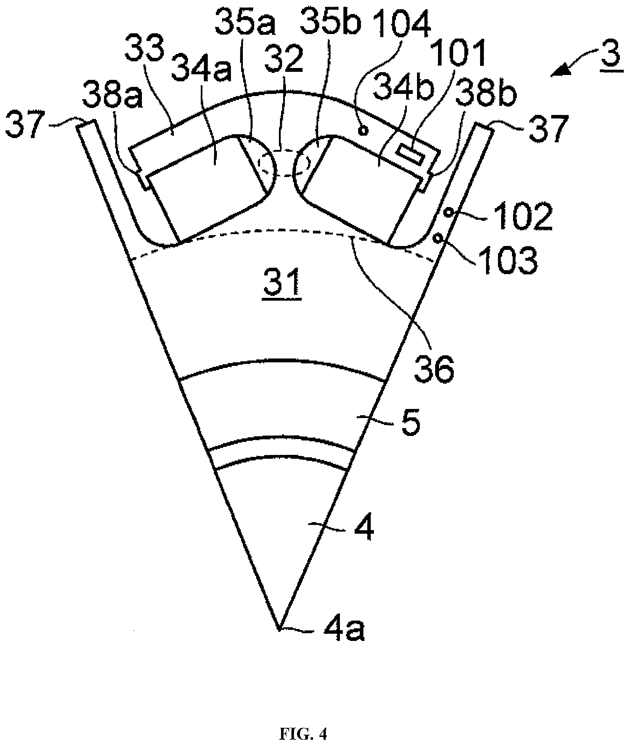

Also, an auxiliary process is performed on each rotor steel plate configuring the rotor 3 in order to fix the positions of neighboring rotor steel plates relative to each other. The auxiliary process is carried out when the rotor steel plate punching process is carried out, and when the rotor steel plates are stacked, stacking can be carried out accurately with the position in which the auxiliary process is performed as a reference. Also, as the positions of the stacked rotor steel plates relative to each other can also be fixed by caulking, carrying the rotor 3 around when manufacturing or the like is easy. Fig. 4 is a front view of one pole of the rotor 3 showing an example of a position in which the auxiliary process is performed. Only a configuration of one pole of the rotor 3 is shown in Fig. 4.

Specifically, in the embodiment, auxiliary processes such as a V-shape process that forms a V-shaped projection portion 101, a boss process that forms a boss projection portion 102, a pinhole process that forms a pinhole 103, and a bolt hole process that forms a bolt hole 104, are performed on each rotor steel plate configuring the rotor 3. The V-shaped projection portion 101 may also be a V-shaped recess portion, and the boss projection portion 102 may also be a boss recess portion. Of the auxiliary processes, one kind only, or multiple kinds of auxiliary process, are performed on the rotor 3. Also, a position in which each auxiliary process is performed not necessarily being limited to the position shown in Fig. 4, it is sufficient that a place in which each auxiliary process is performed is positioned farther to the outer peripheral side of the rotor 3 than the inscribed circle 36. However, no auxiliary process is performed on the center bridge 32.

Also, in the embodiment, an auxiliary process is performed in one place within a region of multiple poles of the rotor 3. Specifically, an auxiliary process is performed in one place in each magnetic pole pair configured of an N-pole and an S-pole, or in one place in each multiple of magnetic pole pairs. However, as there is a need for the rotor steel plates to be stacked accurately, an auxiliary process needs to be carried out in at least two places in the whole of the rotor 3. Furthermore, in order to maintain balance, the positions of an auxiliary process performed in multiple places are symmetrical with respect to the central axis of rotation 4a when seen in a longitudinal section of the rotor 3.

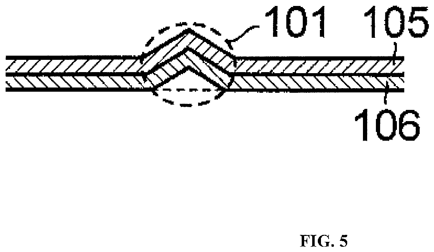

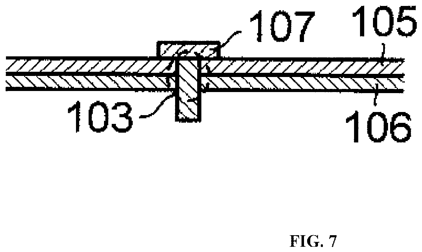

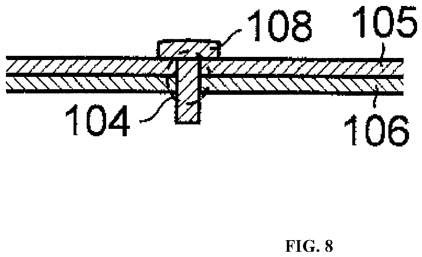

Figs. 5 to 8 are axial direction sectional views of the rotor 3 on which each auxiliary process - the V-shape process, boss process, pinhole process, and bolt hole process - has been performed. Only two rotor steel plates - a first rotor steel plate 105 and second rotor steel plate 106 - are shown in Figs. 5 to 8, with the remaining rotor steel plates being omitted. Furthermore, in Fig. 7 and Fig. 8, a depiction of nuts, washers, and the like is also omitted.

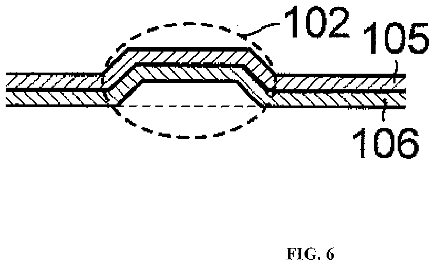

The rotor 3 on which the V-shape process has been performed shown in Fig. 5 is such that a projection portion of the second rotor steel plate 106 is aligned with a recess portion of the first rotor steel plate 105. By the remaining rotor steel plates also being aligned in the same way, the positions of the rotor steel plates relative to each other are fixed, whereby the rotor steel plates are accurately stacked. The rotor 3 on which the boss process has been performed shown in Fig. 6 is such that a projection portion of the second rotor steel plate 106 is aligned with a recess portion of the first rotor steel plate 105. By the remaining rotor steel plates also being aligned in the same way, the rotor steel plates are accurately stacked. The rotor 3 on which the pinhole process has been performed shown in Fig. 7 is such that a pin 107 made of a non-magnetic material is inserted into a pinhole 103 opened in both the first rotor steel plate 105 and second rotor steel plate 106. The pin 107 made of a non-magnetic material is also inserted in the same way into the pinholes 103 of the remaining rotor steel plates. The rotor 3 on which the bolt hole process has been performed shown in Fig. 8 is such that a bolt 108 made of a non-magnetic material is inserted into a bolt hole 104 opened in both the first rotor steel plate 105 and second rotor steel plate 106. The bolt 108 made of a non-magnetic material is also inserted in the same way into the bolt holes 104 opened in the remaining rotor steel plates. Herein, a pin and bolt made of a non-magnetic material are used as the pin 107 and bolt 108 in order not to cause loss of torque generated by the rotor 3.

The above is the configuration of the rotor 3 in the embodiment.

The rotor 3 in the embodiment is of a configuration such that the magnet embedding holes 35a and 35b communicate with the outer periphery of the rotor. Hereafter, the reason for employing this configuration will be explained.

A method whereby a shaft and a rotor steel member are assembled using an interference fit such as a shrink fit is common in motor manufacture. Tensile stress remains in a circumferential direction in the rotor steel member in the interference fit process. Residual stress generated when assembling the rotor also remains during high speed rotor rotation. It has been confirmed by calculations by the inventors using a finite element method that hardly any residual stress is generated on a circumference having the same radius as a portion in which there is a hole, depression, or the like in the rotor steel member (that is, stress only remains in a portion in which there is no hole or depression, and which is connected in a ring-form).

Meanwhile, an enormous centrifugal force is generated in each portion of the rotor when the rotor rotates, particularly when the rotor rotates at high speed. At this time, when the rotor has a center bridge and side bridge as in the existing example, considerable centrifugal stress is generated in the center bridge and side bridge. In this case, tensile stress is exerted on the center bridge because of the centrifugal force generated by the rotor rotating, while shear stress is generated in the side bridge. Therefore, it is necessary that the strength of the side bridge, rather than that of the center bridge, is sufficiently high in order to prevent breakage of the rotor due to high speed rotation, which point renders rotor strength design difficult.

Also, in the existing example, a rotor is configured by a rotor steel plate with a side bridge and a rotor steel plate with no side bridge being combined in order to achieve both an object of reducing leakage magnetic flux and an object of securing rotor strength. Therefore, there is a problem with the rotor of the existing example in that manufacturing costs soar, and the like.

Therefore, a configuration such that the magnet embedding holes 35a and 35b communicate with the outer periphery of the rotor, that is, the configuration in the existing example in which there is no side bridge, is employed as the configuration of the rotor 3 in the embodiment. According to the embodiment, the rotor 3 has no side bridge on the outermost periphery, because of which no assembly residual stress remains on the outermost periphery of the rotor 3. Centrifugal stress generated by centrifugal force when the rotor 3 rotates concentrates in the center bridge 32. However, as the centrifugal stress exerted on the center bridge 32 is tensile stress, it is easy to take measures so that the center bridge 32 does not break, such as by adjusting the width of the center bridge 32. Moreover, the rotor 3 having the configuration such that the magnet embedding holes 35a and 35b communicate with the outer periphery of the rotor provides the considerable advantages described hereafter.

Firstly, unlike the existing example, the rotor 3 in the embodiment has the same sectional form when cut in any plane perpendicular to the rotor axis of rotation. Therefore, the rotor 3 in the embodiment has an advantage in terms of fabrication. When forming the rotor 3 of stacking steel plates too, there is no need to prepare multiple kinds of steel plate with holes of differing forms; rather it is sufficient to prepare only one kind of steel plate. Consequently, steel plate costs can be dramatically reduced in terms of the expense of investing in punching dies for forming steel plates, in terms of part management, and in terms of strength and magnetic field design.

Also, the rotor 3 in the embodiment has fewer magnetic flux leakage paths than the existing example wherein there is a side bridge. Therefore, magnet magnetic flux is liable to interlink with the winding, which contributes to an increase in torque.

Furthermore, the rotor 3 according to the embodiment also has an advantage in terms of cooling. That is, the rotor 3 has good ventilation in the rotor axial direction, which is advantageous in cooling, particularly in magnet cooling. Consequently, by employing the rotor 3 according to the embodiment, regulations relating to motor capacity can be relaxed.

Furthermore, when causing all the magnet embedding holes 35a and 35b to communicate with the outer periphery of the rotor, the permanent magnets 34a and 34b are supported with uniform stress over the whole length by the outer peripheral edge portion 33. Therefore, stress is unlikely to be generated in the interiors of the permanent magnets 34a and 34b, whereby the permanent magnets 34a and 34b can be protected from breakage.

As another characteristic of the embodiment, there is the q-axis projection 37. The q-axis projection 37 can generate strong reluctance torque, which contributes to an increase in torque generated in the rotor 3.

Furthermore, as another characteristic of the embodiment, there is the form of the outer peripheral edge portion 33. When providing an irregularity in the outer peripheral surface of the rotor 3, a higher harmonic component of torque generated in the rotor 3 can be converted into a fundamental wave component, whereby torque ripple is reduced, and torque can be increased. Meanwhile, it is widely known that when force is exerted on an irregular portion, locally high stress is generated due to a phenomenon called stress concentration. In the case of a rotor such that a magnet embedding hole does not communicate with the outer periphery of the rotor, and the outermost periphery is connected in a ring-form, as in the existing example, assembly residual stress remains in a ring-form region in the vicinity of the outer peripheral. surface of the rotor. Therefore, the rotor of the existing example is such that it is difficult to provide an irregularity leading to stress concentration in the outermost peripheral surface of the rotor in which this kind of residual stress remains. In the embodiment, however, the magnet embedding holes 35a and 35b are caused to communicate with the outer periphery of the rotor, because of which no residual stress remains in the outer peripheral edge portion 33, which is an outermost peripheral region of the rotor 3. Consequently, in the embodiment, an irregularity can easily be provided in the outer peripheral edge portion 33, which is the outermost peripheral region of the rotor 3, in order to increase torque. Therefore, in the embodiment, the radius of curvature of the outer peripheral surface of the outer peripheral edge portion 33, which is on the outer side of the permanent magnets as seen from the rotor center of rotation, is smaller than the distance from the rotor center of rotation to the outermost peripheral portion of the rotor. In this way, in the embodiment, the ripple of torque generated in the rotor 3 can be reduced, and torque increased, without increasing the amount of stress generated.

Also, as a characteristic of the embodiment, there are the magnet embedding holes 35a and 35b arrayed in an inverted V-shape. Advantages obtained from this characteristic are described as follows.

Firstly, tensile stress remains in the circumferential direction in the rotor steel members in the process of interference fitting the shaft 4 to the rotor 3. Hardly any residual stress is generated on a circumference having the same radius as the magnet embedding holes 35a and 35b. Consequently, the rotor 3 of the embodiment is such that hardly any assembly residual stress remains farther to the outer side in the rotor radial direction than the inscribed circle 36 of the magnet embedding holes 35a and 35b. Meanwhile, tensile stress (centrifugal stress) caused by centrifugal force is generated in the center bridge 32 when the rotor 3 rotates. When the magnet embedding holes 35a and 35b are arrayed in an inverted V-shape, the position of the center bridge 32 is farther to the outer side in the rotor radial direction than the inside of the inscribed circle 36, where residual stress is mainly generated. In this way, according to the embodiment, the center bridge 32, in which centrifugal stress concentrates when the rotor 3 rotates, is farther from the inside of the inscribed circle 36, where residual stress caused by the interference fit process is mainly generated, because of which the strength of the center bridge 32 when the rotor 3 rotates can be increased.

Also, in the embodiment, the positioning projections 38a and 38b are provided in the outer peripheral edge portion 33, which is on the outer side in the radial direction as seen from the permanent magnets 34a and 34b. Consequently, by the permanent magnets 34a and 34b being fixed by being pressed against the positioning projections 38a and 38b, imbalance in centrifugal force generated in the two permanent magnets 34a and 34b forming one pole can be prevented. Together with this, imbalance in the distribution of magnetic flux generated by each permanent magnet can be prevented.

There is also a method whereby a positioning projection is provided in a rotor steel member on the inner side in the radial direction as seen from the permanent magnets, as in the existing example, but there is a problem in carrying this out with the magnet embedding holes 35a and 35b disposed in an inverted V-shape. This is because the positioning projection is provided near a range within which assembly residual stress is generated. When a positioning projection is provided, a depression is also created at the same time. Stress concentration is essentially liable to occur in a depression. In this case, provided that a depressed portion can be chamfered with a large chamfer radius, stress concentration can be relaxed to an extent, but a chamfer radius such that stress can be sufficiently relaxed is often equivalent to or greater than the magnet thickness, which is useless for positioning. Therefore, providing a positioning projection in a rotor steel member on the inner side in the radial direction as seen from the permanent magnets, as in the existing example, is not desirable, as the strength of the positioning projection against assembly residual stress is reduced.

Also, in the embodiment, one kind only, or multiple kinds of auxiliary process among four kinds of auxiliary process, those being a V-shape process, a boss process, a pinhole process, and a bolt hole process, are performed on each rotor steel plate configuring the rotor 3. Consequently, according to the embodiment, when configuring the rotor 3 by stacking rotor steel plates, positions of neighboring rotor steel plates with respect to each other can be fixed. Consequently, the rotor 3 is configured by the rotor steel plates being accurately stacked, whereby the permanent magnet embedded rotating electrical machine can be stably manufactured.

Also, in the embodiment, an auxiliary process is performed on a rotor steel plate in a region between the inscribed circle 36 of the magnet embedding holes 35a and 35b and the outer periphery of the rotor 3. This region is a region wherein there is little residual stress of stress generated in the process of interference fitting the shaft 4 to the rotor steel member. Consequently, even when an auxiliary process is performed in this region, there is little possibility of breakage such as a crack occurring during high speed rotation of the rotor 3. Also, in the embodiment, tensile stress caused by centrifugal force is exerted on the center bridge 32, because of which an auxiliary process is performed avoiding the center bridge 32. Consequently, breakage of the center bridge 32 can be prevented in the embodiment.

Also, in the embodiment, an auxiliary process is performed in one place in a region of multiple poles of the rotor 3, that is, an auxiliary process is performed in one place in each magnetic pole pair or in one place in each multiple of magnetic pole pairs. Advantages of this are as follows. Firstly, an insulating process is performed on the surface of a rotor steel plate in order to restrict generation of a circulating current flowing in an axial direction. Herein, when the auxiliary process is performed on the rotor steel plate, an insulating film on the rotor steel plate surface comes off, and the rotor steel plate communicates with a neighboring rotor steel plate. Further, supposing that an auxiliary process is performed in two or more places in one magnetic pole pair of the rotor 3, a current path wherein the places in which the auxiliary process is performed in each rotor steel plate are connected in the axial direction is formed within a region corresponding to one pole of the rotor 3. Furthermore, a current path wherein the places in which the auxiliary process is performed in each rotor steel plate are connected in the axial direction is also formed within a region corresponding to a neighboring pole. Further, when the permanent magnet embedded motor operates, circulating current is liable to flow along the two current paths formed in this way, leading to the rotor 3 generating heat or to a loss in generated torque. In the embodiment, however, an auxiliary process is performed in one place in a region of multiple poles of the rotor 3. Therefore, a formation of two current paths along which circulating current flows is avoided, whereby the rotor 3 generating heat and a loss in generated torque can be prevented.

Also, in the embodiment, a pin and bolt made of a non-magnetic material are used as the pin 107 and bolt 108 in an auxiliary process. Supposing that the pin 107 and bolt 108 are of a magnetic material, circulating current is liable to be generated in the axial direction of a rotor steel plate, leading to a loss in torque generated by the rotor 3. In the embodiment, however, this kind of problem does not occur because an auxiliary process on a rotor steel plate is carried out using the pin 107 and bolt 108 made of a non-magnetic material.

According to the embodiment, as heretofore described, a permanent magnet embedded rotating electrical machine that has superior rotor strength and that can be manufactured at low cost, which is a first object of the invention, can be realized. Also, increasing torque generated by the rotor without reducing rotor strength, which is a second object of the invention, can also be realized. Furthermore, accurately stacking rotor steel plates, thereby stably manufacturing a permanent magnet embedded rotating electrical machine that achieves the first and second objects, which is a third object of the invention, can be realized.

Heretofore, one embodiment of the invention has been described, but other embodiments of the invention are conceivable. For example, in the heretofore described embodiment, highly accurate stacking of rotor steel plates is carried out with positions in which four kinds of auxiliary process are performed as a reference, but highly accurate stacking of rotor steel plates can also be realized by welding rotor steel plates together. When welding, however, a jig for stacking the rotor steel plates is needed, which leads to an increase in cost compared with the heretofore described embodiment. Also, in the heretofore described embodiment, the invention is applied to a motor, but the invention is of course also applicable to a generator.

### Reference Signs List

1 ···· Frame, 2 ···· Iron core, 3 ···· Rotor, 31 ···· Core portion, 32 ···· Center bridge, 33 ···· Outer peripheral edge portion, 34a, 34b ···· Permanent magnet, 35a, 35b ···· Magnet embedding hole, 36 ···· Inscribed circle, 37 ···· q-axis projection, 38a, 38b ···· Positioning projection, 4 ···· Shaft, 4a ···· Central axis of rotation, 5 ···· Rolling bearing, 6 ···· Shield, 11, 12 ···· Stacking steel plate, 13a, 13b ···· Permanent magnet, 14a, 14b, 14a', 14b', 15a, 15b ···· Cavity portion, 16a, 16b ···· Cutout portion, 18a, 18b, 18a', 18b' ···· Holding hole portion, 19a, 19b ···· Side bridge, 19c ···· Center bridge, 101 ···· V-shaped projection portion, 102 ···· Boss projection portion, 103 ···· Pinhole, 104 ···· Bolt hole, 105 ···· First rotor steel plate, 106 ···· Second rotor steel plate, 107 ···· Pin, 108 ···· Bolt.

## Claims

1. A permanent magnet embedded rotating electrical machine such that permanent magnets (34a, 34b) of a plurality of poles are embedded in an interior of a rotor (3) of which one pole is configured by two permanent magnets (34a, 34b) and which is formed by a plurality of rotor steel plates being stacked, wherein
the rotor (3) has in each pole two magnet embedding holes (35a, 35b), which are holes that house one each of the two permanent magnets (34a, 34b), wherein the two magnet embedding holes (35a, 35b) communicate with an outer periphery of the rotor (3), and
wherein positions of neighboring rotor steel plates with respect to each other are auxiliarily fixed in a region between an inscribed circle of the magnet embedding holes (35a, 35b) of the rotor (3) and the outer periphery of the rotor (3) in each rotor steel plate configuring the rotor (3),
**characterised in that** regions of inner peripheral walls of the magnet embedding holes (35a, 35b) on a side of a rotor central axis project in a direction away from the rotor center of rotation as the regions are away more from a center of neighboring poles and are nearer to a region between the two magnet embedding holes (35a, 35b).

2. The permanent magnet embedded rotating electrical machine according to claim 1, wherein the positions of neighboring rotor steel plates with respect to each other are auxiliarily fixed in one place within a region of at least two poles of the plurality of poles in each rotor steel plate.

3. The permanent magnet embedded rotating electrical machine according to claim 1 or 2, wherein the positions of neighboring rotor steel plates with respect to each other are auxiliarily fixed in one place within each magnetic pole pair, wherein each magnetic pole pair comprises an N-pole and an S-pole of the plurality of poles.

4. The permanent magnet embedded rotating electrical machine according to claim 1 or 2, wherein the positions of neighboring rotor steel plates with respect to each other are auxiliarily fixed in one place within each multiple of magnetic pole pairs, and wherein the positions of neighboring rotor steel plates with respect to each other are auxiliarily fixed in at least two places in the whole of the rotor (3).

5. The permanent magnet embedded rotating electrical machine according to claim 1, wherein the rotor has a q-axis projection protruding in a direction away from the rotor central axis of rotation between neighboring poles.

6. The permanent magnet embedded rotating electrical machine according to claim 1, having positioning projections (38a, 38b) that regulate movement of the permanent magnets (34a, 34b) in regions of inner walls of the magnet embedding holes (35a, 35b) on an outer side in the respective rotor radial direction as seen from the permanent magnets (34a, 34b).

7. The permanent magnet embedded rotating electrical machine according to claim 6, wherein the positional projections (38a, 38b) are each provided in an outer peripheral edge portion (33), which is on the outer side in the radial direction as seen from the permanent magnets (34a, 34b), and wherein the permanent magnets (34a, 34b) are fixed by being pressed against the two positioning projections (38a, 38b).

8. The permanent magnet embedded rotating electrical machine according to claim 1, wherein an outer peripheral edge portion (33) of each pole is formed of a rotor steel member on an outer side of the permanent magnets (34a, 34b) of the pole as seen from the central axis of rotation, and wherein one portion or the whole of an outer peripheral surface of the outer peripheral edge portion (33) of one pole has a radius of curvature smaller than a distance from the rotor central axis of rotation to an outermost peripheral portion of the rotor (3),

9. The permanent magnet embedded rotating electrical machine according to claim 1, wherein fixation of the permanent magnets is assisted with an adhesive.

10. The permanent magnet embedded rotating electrical machine according to any one of claims 1 to 9, wherein the auxiliary fixation is any one kind or more of a V-shape fixation, a boss fixation, a pinhole fixation, and a bolt hole fixation.

## Patentansprüche

1. Drehende elektrische Maschine mit eingebetteten Permanentmagneten, sodass Permanentmagnete (34a, 34b) mehrerer Pole in das Innere eines Rotors (3) eingebettet sind, von dem ein Pol durch zwei Permanentmagnete (34a, 34b) konfiguriert ist, und der durch mehrere gestapelte Rotorstahlbleche gebildet ist, wobei
der Rotor (3) in jedem Pol zwei Magneteinbettungslöcher (35a, 35b) aufweist, die Löcher sind, die jeweils einen der zwei Permanentmagneten (34a, 34b) aufnehmen, wobei die zwei Magneteinbettungslöcher (35a, 35b) mit einem Außenumfang des Rotors (3) in Verbindung stehen, und
wobei Positionen benachbarter Rotorstahlbleche in Bezug zueinander in einer Region zwischen einem Inkreis der Magneteinbettungslöcher (35a, 35b) des Rotors (3) und dem Außenumfang des Rotors (3) in jedem Rotorstahlblech, das den Rotor (3) konfiguriert, hilfsweise fixiert sind,
**dadurch gekennzeichnet, dass** Regionen von inneren Umfangswänden der Magneteinbettungslöcher (35a, 35b) auf einer Seite einer Rotormittelachse in eine Richtung von dem Rotordrehpunkt weg vorstehen, wobei sich die Regionen weiter von einem Mittelpunkt benachbarter Pole entfernt befinden und sich näher an einer Region zwischen den zwei Magneteinbettungslöchern (35a, 35b) befinden.

2. Drehende elektrische Maschine mit eingebetteten Permanentmagneten nach Anspruch 1, wobei die Positionen benachbarter Rotorstahlplatten in Bezug zueinander an einer Stelle innerhalb einer Region von mindestens zwei Polen der mehreren Pole in jedem Rotorstahlblech hilfsweise fixiert sind.

3. Drehende elektrische Maschine mit eingebetteten Permanentmagneten nach Anspruch 1 oder 2, wobei die Positionen benachbarter Rotorstahlbleche in Bezug zueinander an einem Ort innerhalb jedes Magnetpolpaars hilfsweise fixiert sind, wobei jedes Magnetpolpaar einen N-Pol und einen S-Pol der mehreren Pole umfasst.

4. Drehende elektrische Maschine mit eingebetteten Permanentmagneten nach Anspruch 1 oder 2, wobei die Positionen benachbarter Rotorbleche in Bezug zueinander an einer Stelle innerhalb von jedem Vielfachen von Magnetpolpaaren fixiert sind, und wobei die Positionen benachbarter Rotorstahlbleche in Bezug zueinander an mindestens zwei Stellen in dem gesamten Rotor (3) hilfsweise fixiert sind.

5. Drehende elektrische Maschine mit eingebetteten Permanentmagneten nach Anspruch 1, wobei der Rotor einen q-Achsenvorsprung aufweist, der in einer Richtung von der zentralen Rotordrehachse weg zwischen benachbarten Polen vorsteht.

6. Drehende elektrische Maschine mit eingebetteten Permanentmagneten nach Anspruch 1, die Positionierungsvorsprünge (38a, 38b) aufweist, welche die Bewegung der Permanentmagnete (34a, 34b) von den Permanentmagneten (34a, 34b) aus gesehen in Regionen von Innenwänden der Magneteinbettungslöcher (35a, 35b) auf einer Außenseite in der entsprechenden radialen Richtung des Rotors regulieren.

7. Drehende elektrische Maschine mit eingebetteten Permanentmagneten nach Anspruch 6, wobei die Positionierungsvorsprünge (38a, 38b) jeweils in einem äußeren Umfangsrandabschnitt (33) vorgesehen sind, der sich von den Permanentmagneten (34a, 34b) aus gesehen in radialer Richtung auf der Außenseite befindet, und wobei die Permanentmagnete (34a, 34b) dadurch fixiert werden, dass sie gegen die zwei Positionierungsvorsprünge (38a, 38b) gedrückt werden.

8. Drehende elektrische Maschine mit eingebetteten Permanentmagneten nach Anspruch 1, wobei ein äußerer Umfangsrandabschnitt (33) jedes Pols von der zentralen Drehachse aus gesehen aus einem Rotorstahlelement auf einer Außenseite der Permanentmagneten (34a, 34b) des Pols gebildet ist, und wobei ein Abschnitt oder die gesamte äußere Umfangsfläche des äußeren Umfangsrandabschnitts (33) eines Pols einen Krümmungsradius aufweist, der kleiner ist als ein Abstand von der zentralen Rotordrehachse zu einem äußersten Umfangsabschnitt des Rotors (3).

9. Drehende elektrische Maschine mit eingebetteten Permanentmagneten nach Anspruch 1, wobei die Fixierung der Permanentmagnete durch einen Klebstoff unterstützt wird.

10. Drehende elektrische Maschine mit eingebetteten Permanentmagneten nach einem der Ansprüche 1 bis 9, wobei die Hilfsfixierung eine oder mehrere Arten von einer V-förmigen Fixierung, einer Nabenfixierung, einer Stiftlochfixierung und einer Bolzenlochfixierung ist.

## Revendications

1. Machine électrique rotative à aimants permanents encastrés de sorte que les aimants permanents (34a, 34b) d'une pluralité de pôles sont encastrés dans un intérieur d'un rotor (3) dont un pôle est configuré par deux aimants permanents (34a, 34b) et qui est formé par une pluralité de plaques en acier de rotor empilées, dans laquelle :
le rotor (3) a, dans chaque pôle, deux trous d'encastrement d'aimant (35a, 35b) qui sont des trous qui logent chacun des deux aimants permanents (34a, 34b), dans laquelle les deux trous d'encastrement d'aimant (35a, 35b) communiquent avec une périphérie externe du rotor (3), et
dans laquelle les positions des plaques en acier de rotor voisines les unes par rapport aux autres sont fixées de manière auxiliaire dans une région entre un cercle inscrit des trous d'encastrement d'aimant (35a, 35b) du rotor (3) et la périphérie externe du rotor (3) dans chaque plaque en acier de rotor configurant le rotor (3),
**caractérisée en ce que** les régions des parois périphériques internes des trous d'encastrement d'aimant (35a, 35b) sur un côté d'un axe central de rotor font saillie dans une direction opposée au centre de rotation de rotor, lorsque les régions sont plus éloignées d'un centre des pôles voisins et sont plus proches d'une région entre les deux trous d'encastrement d'aimant (35a, 35b).

2. Machine électrique rotative à aimants permanents encastrés selon la revendication 1, dans laquelle les positions des plaques en acier de rotor voisines les unes par rapport aux autres sont fixées, de manière auxiliaire, à un endroit dans une région d'au moins deux pôles de la pluralité de pôles dans chaque plaque en acier de rotor.

3. Machine électrique rotative à aimants permanents encastrés selon la revendication 1 ou 2, dans laquelle les positions des plaques en acier de rotor voisines les unes par rapport aux autres sont fixées, de manière auxiliaire, à un endroit dans chaque paire de pôles magnétiques, dans laquelle chaque paire de pôles magnétiques comprend un pôle N et un pôle S de la pluralité de pôles.

4. Machine électrique rotative à aimants permanents encastrés selon la revendication 1 ou 2, dans laquelle les positions des plaques en acier de rotor voisines les unes par rapport aux autres sont fixées, de manière auxiliaire, à un endroit dans chaque multiple de paires de pôles magnétiques, et dans laquelle les positions des plaques en acier de rotor voisines les unes par rapport aux autres sont fixées, de manière auxiliaire, à au moins deux endroits dans la totalité du rotor (3).

5. Machine électrique rotative à aimants permanents encastrés selon la revendication 1, dans laquelle le rotor a une saillie d'axe q faisant saillie dans une direction opposée à l'axe de rotation central de rotor entre les pôles voisins.

6. Machine électrique rotative à aimants permanents encastrés selon la revendication 1, ayant des saillies de positionnement (38a, 38b) qui régulent le mouvement des aimants permanents (34a, 34b) dans des régions de parois internes des trous d'encastrement d'aimant (35a, 35b) sur un côté externe dans la direction radiale de rotor respective, comme observé depuis les aimants permanents (34a, 34b).

7. Machine électrique rotative à aimants permanents encastrés selon la revendication 6, dans laquelle les saillies de positionnement (38a, 38b) sont chacune prévues dans une partie de bord périphérique externe (33) qui est sur le côté externe, dans la direction radiale, comme observé depuis les aimants permanents (34a, 34b), et dans laquelle les aimants permanents (34a, 34b) sont fixés en étant comprimés contre les deux saillies de positionnement (38a, 38b).

8. Machine électrique rotative à aimants permanents encastrés selon la revendication 1, dans laquelle une partie de bord périphérique externe (33) de chaque pôle est formée avec un élément en acier de rotor sur un côté externe des aimants permanents (34a, 34b) du pôle, comme observé depuis l'axe de rotation central, et dans laquelle une partie ou la totalité d'une surface périphérique externe de la partie de bord périphérique externe (33) d'un pôle a un rayon de courbure inférieur à une distance allant de l'axe de rotation central de rotor jusqu'à la partie périphérique le plus à l'extérieur du rotor (3).

9. Machine électrique rotative à aimants permanents encastrés selon la revendication 1, dans laquelle la fixation des aimants permanents est assistée avec un adhésif.

10. Machine électrique rotative à aimants permanents encastrés selon l'une quelconque des revendications 1 à 9, dans laquelle la fixation auxiliaire est de n'importe quel type ou plus parmi une fixation en forme de V, une fixation par bossage, une fixation par trou d'aiguille et une fixation par trou de boulon.
